Europäisches Patentamt

European Patent Office

Office européen des brevets

(11) Publication number: **0 191 574**
A2

# (12) EUROPEAN PATENT APPLICATION

(21) Application number: 86300550.0

(22) Date of filing: 28.01.86

(51) Int. Cl.⁴: **A 61 C 5/02**

(30) Priority: 09.02.85 JP 17314/85 U

(43) Date of publication of application: 20.08.86
Bulletin 86/34

(84) Designated Contracting States: **AT CH DE FR GB IT LI**

(71) Applicant: **Shoji, Yoshiro, 18-1, Ueno 1-chome, Taito-ku Tokyo (JP)**

(72) Inventor: **Shoji, Yoshiro, 18-1, Ueno 1-chome, Taito-ku Tokyo (JP)**

(74) Representative: **Calderbank, Thomas Roger et al, MEWBURN ELLIS & CO. 2/3 Cursitor Street, London EC4A 1BQ (GB)**

(54) Tooth root canal internal cutter.

(57) A tooth root canal internal cutter has an inner cylinder (2) moved vertically by means of the eccentric part (3b) of a rotary shaft (3) disposed at right angles to a vertical cylindrical portion (1a) of the cutter. The eccentric part (3b) is provided at the tip of the rotary shaft (3) and is inserted into a horizontal cylindrical portion (1b) diposed at right angles to the vertical cylindrical portion (1a). A guide groove (5) is formed in the inner cylinder (2), having a vertical width into which the tip of the eccentric part (3b) is inserted and having a length elongated in the circumferential direction thereof. The cutter also has a grip cylinder (7) which is inserted into the inner cylinder (2), moves with the sliding of the inner cylinder (2), and detachably grips a cutting blade (11).

TOOTH ROOT CANAL INTERNAL CUTTER

The present invention relates to a tooth root canal internal cutter which is used to enlarge the root canal of a tooth.

As an example of a conventional tooth root canal internal cutter, the one shown in Japanese Utility Model Examined Publication No. 51-40709 is known.

With this cutter, an eccentric shaft formed at the tip of a rotary shaft is inserted into the hole of an inner cylinder which is itself inserted into an outer cylinder so as to be vertically movable, and the inner cylinder is moved vertically by the rotation of the rotary shaft. A cutting blade is installed on this inner cylinder and acts to enlarge the root canal of a tooth.

The root canal of a tooth is not vertical, but is always curved, the degree of curvature being different for each person. Accordingly, with a cutter which performs only vertical movement, as described above, there have been disadvantages in that its cutting blade sometimes gets broken or a part of the tooth gets cut by mistake since cutting resistance becomes large and since the cutter is bent into a bow shape. In order to improve upon this conventional cutter which only moves vertically as described above, an improved type has been developed which is disclosed in, for instance, Japanese Utility Model Examined Publication No. 56-21374.

The cutter shown in this publication is arranged such that a further eccentric pin is provided on the tip of an eccentric shaft in the aforementioned cutter, and the inner cylinder is moved vertically by the eccentric shaft, while the outer shaft is rotated by means of the pin, thereby effecting drilling-in and cutting operations.

With this cutter, however, there arises a problem in that, since the cutting blade rotates while moving vertically, the cutting blade is to be constantly rotated with the result that the root canal is liable to be cut more than necessary as compared with a cutter whose cutting blade moves only vertically. At the same time, it is difficult for the tip of the cutting blade to move along the line of curvature of the root canal of a tooth, and if the tip of the cutting blade comes into contact with a position slightly removed from the root canal, the cutting blade would drill a hole in the position of contact removed from the root canal.

Accordingly, the present invention is designed to correct the aforementioned drawbacks, and it is an object of the present invention to provide a tooth root canal cutter which is capable of moving along the line of curvature in the curved portion of a root canal and which will not drill a hole in a portion away from the root canal by virtue of an arrangement in which the cutting blade, i.e. a dentist's file, generally moves vertically, and in which the rotation of the cutting blade and changes in the direction of the cutting blade only occur when cutting resistance is created by a curved portion in the root canal of a tooth.

The above and other objects and features of the invention will be become more apparent in the following description when considered in connection with the accompanying drawings.

Fig. 1 is a cross-sectional view of a first embodiment of a tooth root canal internal cutter according to the present invention;

Fig. 2 is a perspective view of the cutter shown in Fig. 1;

Fig. 3 is a transverse cross-sectional view of the cutter shown in Fig. 1;

Fig. 4 is a side elevational view of a cutting blade to be inserted into the cutter shown in Fig. 1;

Fig. 5 is a cross-sectional view of a second embodiment of the present invention;

Fig. 6 is a perspective view of a cutter shown in Fig. 5;

Fig. 7 is a cross-sectional view of the cutter shown in Fig. 5;

Fig. 8 is a side elevational view of a cutting blade to be inserted into the cutter shown in Fig. 5; and

Fig. 9 is a cross-sectional view explaining a third embodiment of the present invention.

Detailed description will be made hereafter of the present invention with reference to embodiments shown in the accompanying drawings.

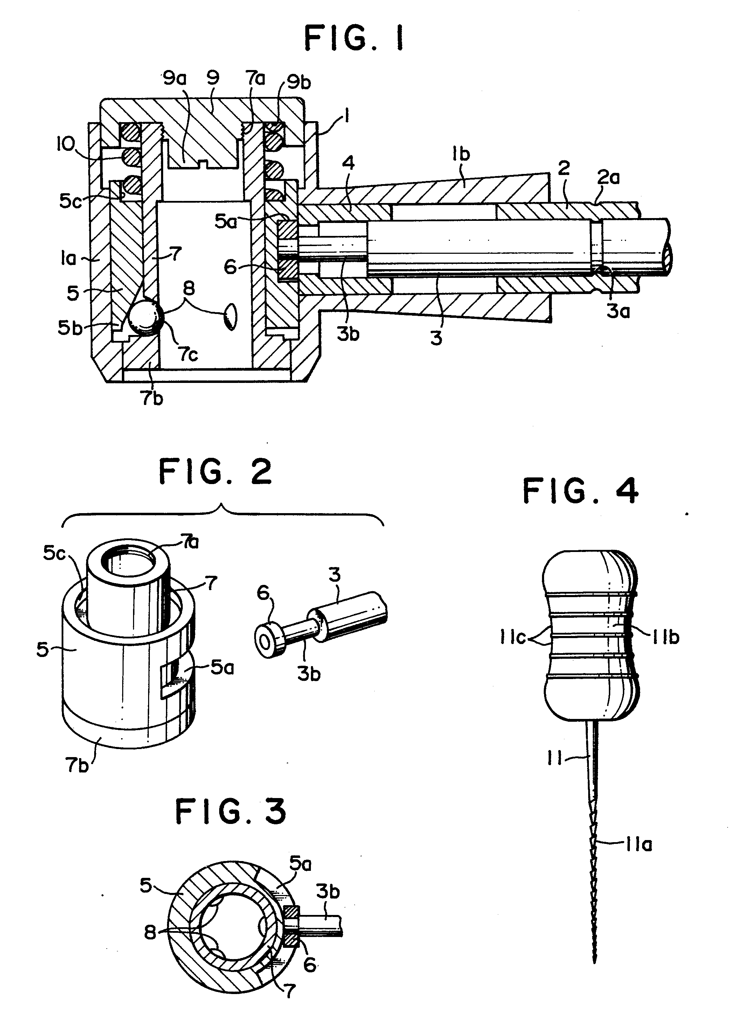

Figs. 1 to 4 show a first embodiment of the present invention. In the Figures, reference numeral 1 denotes an outer cylinder, which is constituted by a vertical cylindrical portion 1a, and a horizontal cylindrical portion 1b extending at right angles from approximately the intermediate portion of the vertical cylindrical portion 1a. Reference numeral 2 denotes an inner cylinder with the tip thereof being fitted into the horizontal cylindrical portion 1b. Reference numeral 3 denotes a rotary shaft pivotally supported (i.e. the annular groove 3a thereof is prevented from coming off and, at the same time, rotatably supported by a plurality of projections formed on the inner cylinder 2) inside the inner cylinder 2, and its rightward end is coupled with a rotary driving section. The other end of this rotary shaft 3 is extended to the inside of the horizontal cylindrical portion 1b and is, at the same time, pivotally supported by a ring 4. Furthermore, an eccentric shaft 3b is formed integrally at the tip thereof. Accordingly, the rotation of the rotary shaft 3 causes the eccentric shaft 3b to move in a circle.

Reference numeral 5 denotes an inner cylinder inserted into the vertical cylindrical portion 1a of the outer cylinder 1 so as to be vertically movable. A guide groove 5a is formed along its periphery at an angle of approximately $90^{\circ}$ facing the eccentric shaft 3b in the rotary shaft. In addition, a collar 6 fitted into the eccentric shaft 3b is inserted into this guide groove 5a. Incidentally, this collar 6 is to be provided so that smooth movement of the eccentric shaft 3b inside the guide groove 5a is enabled. Thus, the shaft 3b may be provided integrally with the collar 6. The collar 6 is abutted against the ring 4 so that it will not move in the axial direction of the eccentric shaft 3b. Thus, since the eccentric shaft 3b is inserted into the guide groove 5a of the inner cylinder 5 via the collar 6, when the rotary shaft 3 rotates and the eccentric shaft 3b moves in a circle, the inner cylinder 5 moves vertically. At the same time, if any rotary force is applied to the inner cylinder 5 from outside, the inner cylinder would rotate (by an angle of 90°) within the length of the guide groove 5a. In addition, a tapered portion 5b is formed on the lower inner periphery of the inner cylinder 5, while an annular recess 5c is formed on the upper inner periphery thereof.

Reference numeral 7 denotes a grip cylinder inserted into the inside of the inner cylinder 5 such as to be vertically movable. A female threaded portion 7a is formed at the upper end thereof, and a collar 7b is formed at the lower end thereof. Further, ball-receiving holes 7c are formed at several places near the lower end therof. Furthermore, a ball 8 is inserted into each of these ball-receiving holes 7c in such a manner as to partially project from the inner wall of the grip cylinder 7 but not to  come off inwardly. In addition, the tapered portion 5b of the inner cylinder 5 is located at a position corresponding to these balls 8, and the tapered portion 5b presses the balls 8. Accordingly, if the grip cylinder 7 is lowered with respect to the inner cylinder 5, the pressing action of the tapered portion 5b against the balls 8 disappear, so that the ball 8 can move within the ball receiving hole 7c. Incidentally, the collar 7b of the grip cylinder 7 is slidably in contact with the inner wall surface of the vertical cylindrical portion 1a of the outer

cylinder, so that the ball 8 will not drop from the ball-receiving hole 7c.

Reference numeral 9 denotes a screw cover which is screwably secured to the female threaded portion 7a of the grip cylinder 7, and a screw head 9a is formed so that it can be screwed along the inside of the grip cylinder 7. In addition, an annular recess 9b is formed on the underside of the screw cover 9, and a spring 10 is interposed between this annular recess 9b and the annular recess 5c of the inner cylinder 5. Accordingly, the grip cylinder 7 is constantly pushed upward by this spring 10 with respect to the inner cylinder 5. Thus, the ball 8 is constantly pressed inwardly by means of the tapered portion 5b. With the above construction, if the screw cover 9 is pushed downward in opposition to the force of the spring 10, the pressing force of the tapered portion 5b in relation to the ball 8 is released, so that the ball 8 becomes movable.

Reference numeral 11 denotes a cutting blade in which a spiral cutting blade 11a is formed at the tip thereof, and a grip 11b having a sufficient size for insertion into the grip cylinder 7 is formed at the head thereof. In addition, a recess 11c is formed on this grip 11b. The balls 8 are to be positioned at this recess 11c so that the cutting blade 11 will not come off. If the cutting blade 11 is intended to be withdrawn or inserted, the screw cover 9 is pushed down in opposition to the resilent force of the spring 10, and the grip cylinder 7 is lowered with respect to the inner cylinder 5. This allows each ball 8 to be movable, so that the grip 11b of the cutting blade 11 can be inserted. Then, if the fingers are let go off the screw cover 9, the grip cylinder 7 is raised by the force of the spring 10 in relation to the inner cylinder 5, and the tapered portion 5b comes into contact with the balls 8. Consequently, a part of each ball 8 projects from the inner wall of the grip cylinder 7, the grip 11b of the cutting blade 11 thereby being gripped and secured by these balls 8.

Next, description will be made for an operation of cutting the root canal of a tooth. If the rotary shaft 3 is rotated with the cutting blade 11 secured to the grip cylinder 7, as described earlier, the inner cylinder 5 starts to move vertically, as described above.

Accordingly, if the tip of the cutting blade 11 is inserted into the root canal of a tooth, the root canal is cut and expanded by the spiral cutting blade 11a of the cutting blade 11 while the cutting blade 11 moves vertically.

As described before, the curved configuration of a root canal varies from person to person, and the cutting blade 11 cannot move any further when it reaches a curved portion. At this juncture, cutting resistance is applied to the cutting blade 11, and the degree of resistance increases to a high level, so that the spiral cutting blade 11a is to receive a rotary force. Accordingly, since the rotary force is transmitted to the inner cylinder 5 via the grip 11b and the grip cylinder 7, slippage occurs between the inner cylinder 5 and the collar 6, thereby causing the inner cylinder 5 to rotate. As a result, the cutting blade 11 can then start to move along the curvature of the root canal.

Incidentally, the fact that the rotary force is transmitted as the rotary force for the inner cylinder 5 is attributable to the the frictional force occurring between the ball 8 and the tapered portion 5b.

As described above, according to this embodiment, the guide groove in the inner cylinder in which an eccentric shaft for moving vertically in the inner cylinder is inserted extends around the circumference of the inner cylinder, so that the inner cylinder can be rotatable with respect to the eccentric shaft. Consequently, if cutting resistance is exerted on the cutting blade which is installed on the inner cylinder by means of the grip cylinder, the cutting blade rotates. Consequently, the cutting blade can be made to curve along the line of curvature of the root canal of a tooth, and the root canal is not enlarged any more than necessary since the cutting blade continuously advances along the root canal. In addition, there will be no such problems as a hole being drilled in a portion removed from a root canal.

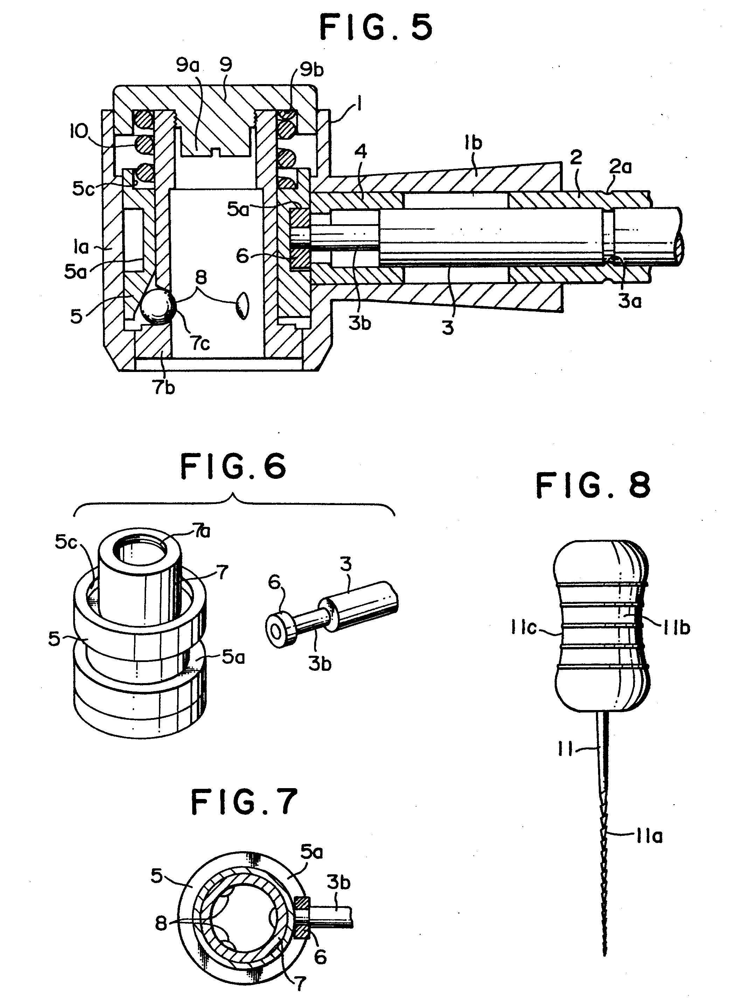

Figs. 5 to 8 describe a second embodiment of the present invention. In the Figures, portions that are identical with those shown in Figs. 1 to 4 are designated by the same reference numerals, and description thereof will be omitted.

In this embodiment, the guide groove 5a is formed around the entire periphery in the circumferential direction of the inner cylinder 5.

If this construction is adopted, the rotating angle of the inner cylinder 5 is not restricted as it is in the case of the first embodiment. As a result, the cutting blade can constantly rotate in response to the stress of cutting resistance applied to the cutting blade 11, so that the drilling of a hole in correspondence to the curve of a curved root canal can be effected more positively.

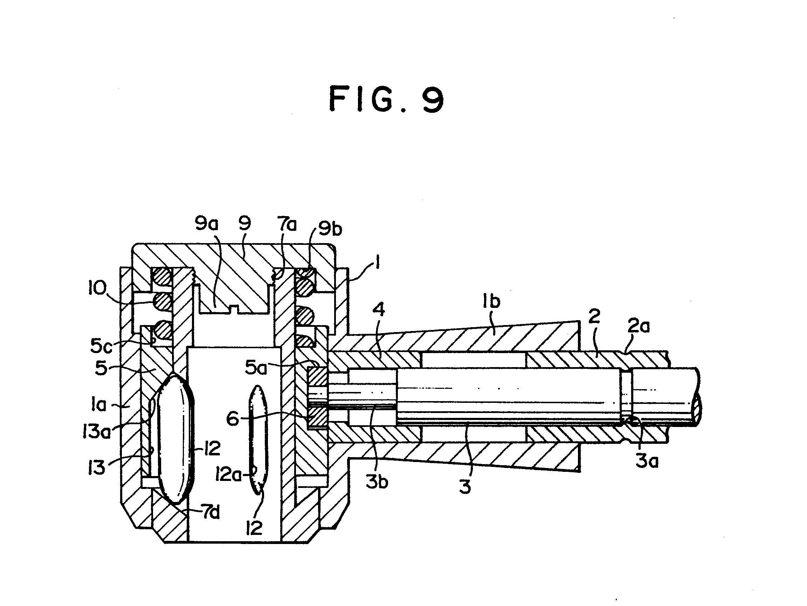

Fig. 9 shows a third embodiment of the present invention. In the Figure, portions that are identical with those shown in Figs. 1 to 8 are designated by the same reference numerals, and description thereof will be omitted.

In this embodiment, unlike the aforementioned

-10-

embodiments, spindle-shaped balls 12 are used, not spherical balls 8. Consequently, the ball-receiving hole 12a is also formed in the shape of a spindle.

However, the size of the opening on the inner peripheral side of the grip cylinder 7 of the ball-receiving hole 12a is substantially smaller than the cross-sectional configuration of the spindle-shaped ball 12, so that the ball 12 does not fall.

Furthermore, since the spindle-shaped balls 12 are adopted, an elongated recess 13 is formed along the lower inner periphery of the inner cylinder 5 in correspondence with the ball-receiving hole 12a. A tapered surface 13a for pushing the head of the ball 12 is formed at the upper end thereof.

In addition, the bottom surface of a recess 7d formed on the upper surface of the collar 7b of the grip cylinder 7 in correspondence with the recess 13 is so formed that it becomes gradually higher as it extends in the outward direction. The adoption of this structure makes it possible for the ball 12 to move horizontally as viewed in the drawing, maintaining the same level and not being inclined.

According to this embodiment, since the aforementioned spindle-shaped balls 12 are provided, contact portions between the balls and the grip are in linear contact, thereby holding the grip 11b more positively.

As described above, according to the present invention, the guide groove in the inner cylinder, into which is inserted an eccentric shaft for moving the inner cylinder vertically, is elongated in the circumferential direction of the inner cylinder so that the inner cylinder can be rotatable. Consequently, if cutting resistance is exerted on the cutting blade which is installed on the inner cylinder by means of the grip cylinder, the cutting blade rotates. Hence, the cutting blade can be made to curve along the line of curvature of the root canal of a tooth and can drill a hole along the line of curvature.

CLAIMS:

1.  A tooth root canal internal cutter having an inner cylinder (2) movable vertically by means of an eccentric part (3b) of a rotary shaft (3) disposed at substantially right angles to a vertical cylindrical portion (1a) of the cutter, the eccentric part (3b) being provided at the tip of the rotary shaft (3) inserted into a horizontal cylindrical portion (1b) disposed at substantially right angles to the vertical cylindrical portion (1a), the inner cylinder (2) having a guide groove (5a) having a vertical width into which the tip of the eccentric part (3b) is inserted and having a length elongated in the circumferential direction thereof; the cutter also having a grip cylinder (7) which is inserted into the inner cylinder (2), is movable with the sliding of the inner cylinder (2), and detachably grips a cutting blade (11).

2.  A tooth root canal internal cutter according to claim 1, wherein the guide groove (5a) extends around the entire circumference of said inner cylinder (2).

3.  A tooth root canal internal cutter according to claim 1 or claim 2, wherein the grip cylinder (7) of the inner cylinder has a collar (6) at the lower end thereof, a ball-receiving hole (7c) is provided in a portion of the inner cylinder (2) immediately above the collar (6), at least one ball (8) in the ball-receiving hole (7c) being resiliently pressed or released by a tapered portion provided at the lower portion of said inner cylinder so as to mount or demount said cutting blade.

4.    A tooth root canal internal cutter according to claim 3, wherein said ball and ball-receiving hole are formed in a spindle shape.

FIG. 1

FIG. 2

FIG. 4

FIG. 3

0191574

# FIG. 5

# FIG.6

# FIG. 8

# FIG.7

# FIG. 9